(19) Europäisches Patentamt
European Patent Office
Office européen des brevets

(11) **EP 4 094 874 B1**

(12) **EUROPEAN PATENT SPECIFICATION**

(45) Date of publication and mention
of the grant of the patent:
**06.08.2025 Bulletin 2025/32**

(21) Application number: **21743742.5**

(22) Date of filing: **14.01.2021**

(51) International Patent Classification (IPC):
**B23K 9/067** $^{(2006.01)}$        **B23K 9/10** $^{(2006.01)}$
**B23K 9/167** $^{(2006.01)}$

(52) Cooperative Patent Classification (CPC):
**B23K 9/0672; B23K 9/167**

(86) International application number:
**PCT/JP2021/000955**

(87) International publication number:
**WO 2021/149570 (29.07.2021 Gazette 2021/30)**

(54) **WELDING DEVICE**

SCHWEISSVORRICHTUNG

DISPOSITIF DE SOUDAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.01.2020 JP 2020009392**

(43) Date of publication of application:
**30.11.2022 Bulletin 2022/48**

(73) Proprietor: **Panasonic Intellectual Property
Management Co., Ltd.
Osaka-shi, Osaka 540-6207 (JP)**

(72) Inventors:
• **OOSAKI, Norikazu
Osaka-shi, Osaka 540-6207 (JP)**
• **IHARA, Hideki
Osaka-shi, Osaka 540-6207 (JP)**
• **TAMAGAWA, Kenta
Osaka-shi, Osaka 540-6207 (JP)**
• **HORIE, Kota
Osaka-shi, Osaka 540-6207 (JP)**

(74) Representative: **Novagraaf International SA
Chemin de l'Echo 3
1213 Onex, Geneva (CH)**

(56) References cited:
WO-A1-2017/169409     JP-A- 2002 203 839
JP-A- 2011 133 330     JP-A- 2012 197 001

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present disclosure relates to a welding device that performs welding by generating an arc between a tungsten electrode and a welding target.

BACKGROUND ART

A welding device that is disclosed in PTL 1 includes: a high frequency voltage application unit that applies a high frequency voltage between a tungsten electrode and a welding target; a current detection unit that detects a welding current; and a controller that acquires, at a time of performing a start operation for starting applying of the high frequency voltage to the high frequency voltage application unit, a delay time from starting of the start operation to the detection of the welding current by the current detection unit, and performs a processing at an abnormal time such as allowing a warning device to output warning when the delay time is more than or equal to a predetermined time.

Citation List

Patent Literature

PTL 1: WO 2017/169409

SUMMARY OF THE INVENTION

Technical problem

However, in above-mentioned PTL 1, even when the delay time at the time of performing the start operation exceeds the predetermined time only one time, the controller performs the processing at an abnormal time. Accordingly, the processing at an abnormal time is likely to be performed due to a temporary factor other than wear of a tungsten electrode or the formation of smear on the tungsten electrode.
The present disclosure has been made in view of the above-mentioned circumstance, and it is an object of the present disclosure to provide a welding device that can suppress the performing of the processing at an abnormal time due to a temporary factor other than wear of a tungsten electrode or the formation of smear on the tungsten electrode.

Solution to problem

According to an aspect of the present invention, there is provided a welding device according to claim 1.
According to this aspect, the controller determines whether or not the processing at an abnormal time is performed based on the delay times at the plurality of previous points of time at which the start operation is performed. Accordingly, compared with the case where whether or not the processing at an abnormal time is performed is determined based on the delay time at the time of performing the start operation one time as described in PTL 1, the processing at an abnormal time is minimally performed due to a temporary factor other than the wear of the tungsten electrode and the formation of smear on the tungsten electrode.

Advantageous effect of invention

According to this disclosure, the welding device can suppress the performing of the processing at an abnormal time due to a temporary factor other than wear of a tungsten electrode or the formation of smear on the tungsten electrode.

BRIEF DESCRIPTION OF THE DRAWINGS

Fig. 1 is a block diagram illustrating a schematic configuration of a welding device according to an exemplary embodiment of the present disclosure.
Fig. 2 is a diagram illustrating output waveforms of a welding instruction signal, a gas supply signal, a high frequency voltage application signal, and a current detection signal when a switch is switched from an OFF state to an ON state.
Fig. 3 is a flowchart for describing processing by a controller when the switch is switched from an OFF state to an ON state.

Fig. 4 is a graph illustrating a plurality of delay times acquired by a controller of a welding device according to a first modification of the exemplary embodiment.

DESCRIPTION OF EMBODIMENT

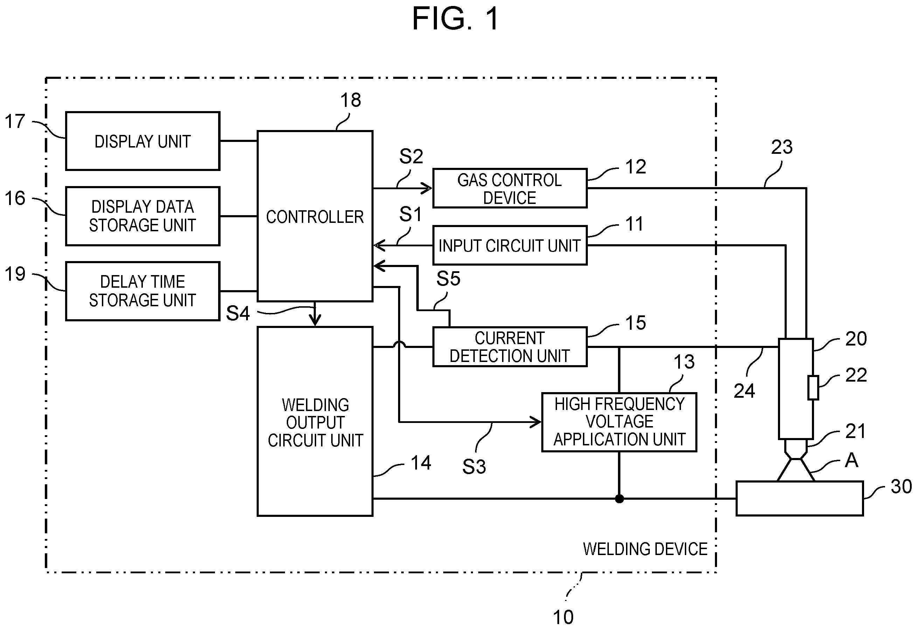

Fig. 1 illustrates welding device 10 according to an example of the present disclosure. Welding device 10 performs tungsten inert gas (TIG) welding by generating arc A between tungsten electrode 21 mounted on welding torch 20 and base material 30 that forms a welding target. Specifically, welding device 10 includes input circuit unit 11, gas control device 12, high frequency voltage application unit 13, welding output circuit unit 14, current detection unit 15, display data storage unit 16, display unit 17 that forms an output unit, controller 18, and delay time storage unit 19.

Input circuit unit 11 outputs welding instruction signal S1 indicating an ON/OFF state of switch 22 mounted on welding torch 20.

When controller 18 starts outputting gas supply signal S2 to gas control device 12, gas control device 12 makes welding torch 20 start jetting of a shielding gas to base material 30. As the shield gas, for example, an argon gas or the like is used. Gas control device 12 is connected to welding torch 20 by way of gas hose 23.

When controller 18 outputs high frequency voltage application signal S3 to high frequency voltage application unit 13, high frequency voltage application unit 13 applies a high frequency high voltage between tungsten electrode 21 and base material 30.

Welding output circuit unit 14 controls a welding voltage and a welding current based on welding control signal S4 output from controller 18. Welding output circuit unit 14 is electrically connected to welding torch 20 via welding output cable 24.

Current detection unit 15 detects a welding current more than or equal to a predetermined current threshold. As a specific operation, current detection unit 15 outputs current detection signal S5 when a welding current exceeds the current threshold.

Display data storage unit 16 stores image data of an image to be output and displayed on display unit 17. The image data to be stored includes image data of first to fourth warning images as an output. The first warning image displays a message that "The electrode is getting smeared.", the second warning image displays a message that "The electrode is worn so that there is a possibility that the generation of an arc does not start.", and the third warning image displays a message that "The electrode is largely worn and smeared. Polishing of the electrode is recommended". The fourth warning image displays a message that "Please polish or exchange the electrode.".

Display unit 17 is, for example, a display. Display unit 17 outputs and displays an image based on image data stored in display data storage unit 16.

Controller 18 selectively performs a control between a control in an AC output mode where welding control signal S4 is outputted to welding output circuit unit 14 in such a manner that a welding voltage and a welding current become an alternating current voltage and an alternating current respectively, and a control in a DC output mode where welding control signal S4 is output to welding output circuit unit 14 in such a manner that a welding voltage and a welding current become a direct current voltage and a direct current respectively.

Controller 18 starts outputting of gas supply signal S2 when switch 22 of welding torch 20 is switched from an OFF state to an ON state so that welding instruction signal S1 output from input circuit unit 11 is switched from a signal indicating an OFF state to a signal indicating an ON state.

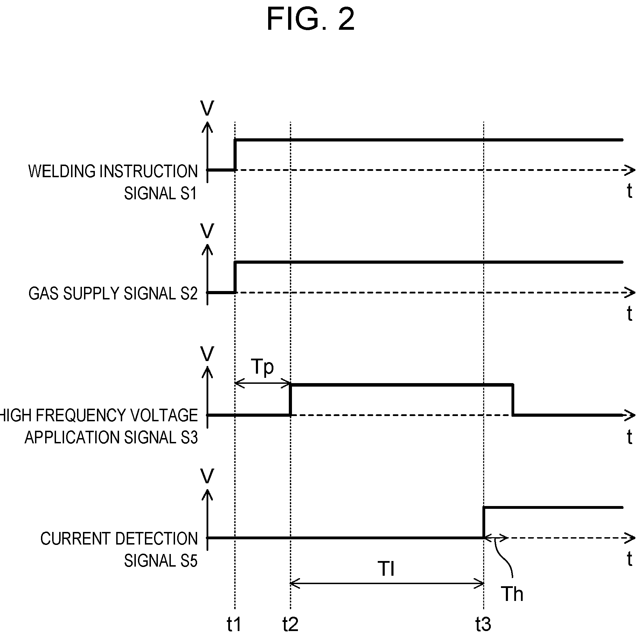

In addition, when predetermined preflow time Tp has elapsed from a point of time that outputting of gas supply signal S2 is started, controller 18 outputs high frequency voltage application signal S3 at timing t2 so as to perform a start operation where high frequency voltage application unit 13 is made to start application of a high frequency high voltage. Then, at this point of time that the voltage applying operation is started, controller 18 acquires delay time TI (see Fig. 2) from a point of time that the start operation is started to a point of time that the detection of a welding current more than or equal to the current threshold by current detection unit 15 is started, and stores delay time TI in delay time storage unit 19. Then, controller 18 references delay times TI at a plurality of points of time at which the start operation is performed including a current point of time at which the start operation is performed that are stored in delay time storage unit 19, and determines whether or not delay times TI at the plurality of points of time at each of which the start operation is performed satisfy a predetermined time condition. Then, controller 18 performs processing at an abnormal time in a case where delay times TI satisfy the predetermined time condition.

The time condition is that the first number N1 (being 2 or more) of times of delay times TI each of which exceeds a predetermined time threshold are included in delay times TI at a plurality of recent number of points of time at which the start operation is performed. The time condition is stored in controller 18. Controller 18 changes the time condition by changing the time threshold in accordance with predetermined setting conditions. The setting conditions are an instruction value of a welding current, a flow rate of a shielding gas, a tip angle of tungsten electrode 21, the dopant concentration in tungsten electrode 21, a diameter of tungsten electrode 21, and a mode that is either an AC output mode or a DC output mode.

The processing at an abnormal time is processing where controller 18 makes display unit 17 output and display any one of first to fourth warning images based on image data stored in display data storage unit 16. Specifically, in a case where the number LN of delay times TI each of which exceeds the predetermined time threshold is more than or equal to the first number N1 and less than a predetermined second number N2 among delay times TI at a plurality of recently-set number of points of time that the start operation is performed, the processing to be performed at an abnormal time becomes a process where controller 18 makes display unit 17 output and display the first warning image. The second number N2 is a value larger than the first number N1. Specifically, in a case where the number LN of delay times TI each of which exceeds the predetermined time threshold is more than or equal to the second number N2 and less than a predetermined third number N3 among delay times TI at the plurality of recently-set number of points of time that the start operation is performed, the processing at an abnormal time becomes a process where controller 18 makes display unit 17 output and display the second warning image. The third number N3 is a value larger than the second number N2. In a case where the number of delay times TI each of which exceeds the predetermined time threshold is more than or equal to the third number N3 and less than a predetermined fourth number N4 among delay times TI at a plurality of recently-set number of points of time that the start operation is performed, the processing at an abnormal time becomes a process where controller 18 makes display unit 17 output and display the third warning image. The fourth number N4 is a value larger than the third number N3. In a case where the number of delay times TI each of which exceeds the predetermined time threshold is more than or equal to the fourth number N4 among delay times TI at a plurality of recently-set number of points of time that the start operation is performed, the processing at an abnormal time becomes a process where controller 18 makes display unit 17 output and display the fourth warning image. The time thresholds and the first to fourth numbers N1 to N4 are set to appropriate values by experiments in advance.

In the exemplary embodiment, the above-mentioned set number of points of time that the start operation is performed is set to 100, and the numbers of the first to fourth numbers N1 to N4 are set to 10, 20, 30 and 40 in this order. However, provided that the set number of points of time that the start operation is performed is larger than the first to fourth numbers N1 to N4, the set number of points of time may be set to the number other than 100. Further, the numbers of first to fourth numbers N1 to N4 may also be set to other numbers provided that a relationship described in the following expression 1 is established.

$$\text{The first number N1} < \text{the second number N2} < \text{the third number N3} < \text{the fourth number N4} \qquad \text{(expression 1)}$$

Further, controller 18 controls welding output circuit unit 14 based on welding control signal S4 in such a manner that, from a point of time that a welding current that is more than or equal to the current threshold is detected by current detection unit 15 to a point of time that predetermined hot start period Th (see Fig. 2) has elapsed, the welding current assumes a predetermined hot start set current value.

The functions of controller 18 are implemented by a central processing unit (CPU) and a storage device.

Delay time storage unit 19 stores delay time TI from a point of time that the start operation is started to a point of time that the detection of a welding current that is more than or equal to the above-described current threshold is performed by current detection unit 15.

Hereinafter, an example of the operation of welding device 10 when a switch is switched from an OFF state to an ON state is described with reference to a timing chart illustrated in Fig. 2.

First, when an operator turns on switch 22 of welding torch 20 at timing t1, input circuit unit 11 outputs welding instruction signal S1 that indicates that input circuit unit 11 is in an ON state. In response to welding instruction signal S1, controller 18 starts outputting of gas supply signal S2, and gas control device 12 makes welding torch 20 start jetting of a shield gas to base material 30. Thereafter, when predetermined preflow time Tp has elapsed from a point of time that outputting of gas supply signal S2 by controller 18 is started, controller 18 outputs high frequency voltage application signal S3 at timing t2 so as to perform a start operation where high frequency voltage application unit 13 is made to start application of the high frequency high voltage. Thereafter, an insulation between tungsten electrode 21 and base material 30 is broken by a high frequency voltage applied by high frequency voltage application unit 13. Accordingly, arc A is generated so that a welding current flows, and current detection unit 15 detects a welding current more than or equal to a predetermined current threshold at timing t3. Then, controller 18 acquires delay time TI from a point of time that the start operation is started to a point of time that current detection unit 15 detects a welding current more than or equal to the current threshold, and stores acquired delay time TI. Further, controller 18 controls welding output circuit unit 14 in such a manner that, from a point of time that a welding current that is more than or equal to the current threshold is detected by current detection unit 15 to a point of time that predetermined hot start period Th has elapsed, the welding current assumes a predetermined hot start set current value.

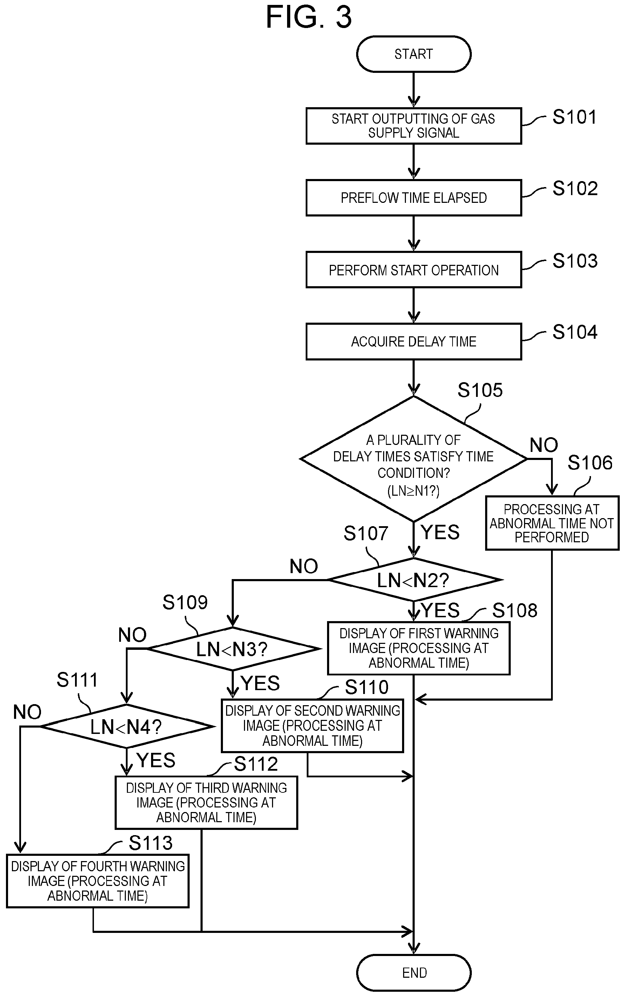

Fig. 3 is a flowchart for describing detailed processing performed by controller 18 when switch 22 is switched from an OFF state to an ON state.

When switch 22 is switched from an OFF state to an ON state so that welding instruction signal S1 output from input circuit unit 11 is switched from a signal indicating an OFF state to a signal indicating an ON state, controller 18 starts outputting of gas supply signal S2 in S101.

Next, in S102, controller 18 waits for a lapse of predetermined preflow time Tp from a point of time that outputting of gas supply signal S2 is started in S101. Then, when predetermined preflow time Tp has elapsed from a point of time that the outputting of gas supply signal S2 is started in S101, in S103, controller 18 performs a start operation by outputting high frequency voltage application signal S3 so as to make high frequency voltage application unit 13 start application of a high frequency high voltage.

Next, in S104, controller 18 acquires delay time TI from a point of time that the start operation is started in S103 to a point of time that a welding current more than or equal to the current threshold is detected by current detection unit 15, and controller 18 stores delay time TI in delay time storage unit 19.

Then, in S105, controller 18 refers to delay times TI at recent 100 points of time at which the start operation is performed that are stored in delay time storage unit 19, and determines whether or not the time condition that the first number N1, that is, 10 or more delay times TI each of which exceeds the predetermined time threshold are included in the recent 100 points of time at which the start operation is performed. In a case where the first number N1 or more of delay times TI that exceeds the predetermined time threshold are not included so that the time condition is not satisfied, the processing advances to S106. On the other hand, in a case where the first number N1 or more of delay times TI that exceeds the predetermined time threshold are included so that the time condition is satisfied, the processing advances to S107.

In S106, controller 18 does not perform the processing at an abnormal time.

Then, in S107, controller 18 refers to delay times TI at recent 100 points of time at which the start operation is performed that are stored in delay time storage unit 19, and determines whether or not the number LN of delay times TI that exceeds the predetermined time threshold is the second number N2, that is, less than 20 among delay times TI at the recent 100 points of time at which the start operation is performed. When the number LN of the delay times TI that exceeds the predetermined time threshold is less than the second number N2, the processing advances to S108. On the other hand, when the number LN of the delay times exceeding the predetermined time threshold is more than or equal to the second number N2, the processing advances to S109.

In S108, controller 18 performs processing of outputting and displaying a first warning image that displays a message that "The electrode is getting smeared." on display unit 17 as the processing at an abnormal time.

Then, in S109, controller 18 refers to delay times TI at recent 100 points of time at which the start operation is performed that are stored in delay time storage unit 19, and determines whether or not the number LN of delay times TI that exceeds the predetermined times threshold is the third number N3, that is, less than 30 among delay times TI at the recent 100 points of time at which the start operation is performed. When the number LN of delay times TI exceeding the predetermined time threshold is less than the third number N3, the processing advances to S110. On the other hand, when the number LN of delay times TI exceeding the predetermined time threshold is more than or equal to the third number N3, the processing advances to S111.

In S110, controller 18 performs processing of outputting and displaying a second warning image that "The electrode is worn so that there is a possibility that the generation of an arc does not start." on the display unit 17 as the processing at an abnormal time.

In S111, controller 18 refers to delay times TI at recent 100 points of time at which the start operation is performed that are stored in delay time storage unit 19, and determines whether or not the number LN of delay times TI that exceeds the predetermined time threshold is the fourth number N4, that is, less than 40 among delay times TI at the recent 100 points of time at which the start operation is performed. When the number LN of delay times TI exceeding the predetermined time threshold is less than the fourth number N4, the processing advances to S112. On the other hand, when the number LN of delay times TI exceeding the predetermined time threshold is more than or equal to the fourth number N4, the processing advances to S113.

In S112, controller 18 performs processing of making the display unit 17 output and display a third warning image "Wear of the electrode is large and smear on the electrode is large. Polishing of the electrode is recommended." as the processing at an abnormal time.

In S113, controller 18 performs processing of making display unit 17 output and display the fourth warning image that "Please polish or exchange the electrode." as the processing at an abnormal time.

In general, when tungsten electrode 21 is worn or smeared, it becomes difficult to shift an operation state to an arc discharge state, and the time from the generation of the high frequency voltage to the start of the flow of the welding current, that is, the delay time TI becomes long. In the exemplary embodiment, when the frequency at which the delay time TI exceeds the time threshold becomes high, controller 18 performs the processing at an abnormal time, and display unit 17 displays the first to fourth warning images. Accordingly, an operator can recognize the consumption or a smear on tungsten electrode 21, and can take a measure such as polishing tungsten electrode 21 or exchanging tungsten electrode 21. Therefore, it is possible to suppress the occurrence of a state where starting of an arc takes an excessively long time or starting of an arc cannot be performed due to consumption or smear on tungsten electrode 21.

The controller determines whether or not the processing at an abnormal time should be performed based on the delay times TI at a plurality of points of time at which the start operation is performed. Accordingly, compared with the case where the controller determines whether or not the processing at an abnormal time should be performed based on the delay time at a point of time at which the start operation is performed one time as described in PTL 1, the processing at an abnormal time is minimally performed due to a temporary factor other than the consumption and the smear on tungsten electrode 21. Therefore, unnecessary polishing or exchange of tungsten electrode 21 can be suppressed.

(First modification of exemplary embodiment - according to the claimed invention)

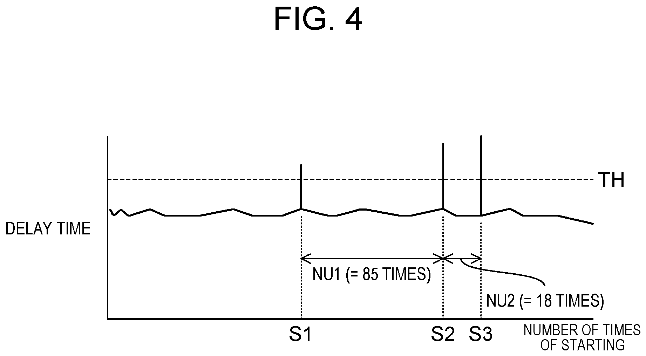

In a first modification of the present exemplary embodiment, the time condition is that delay time TI in the current start operation exceeds predetermined threshold TH (see Fig. 4), and the number of times of the start operation performed between the current start operation and the previous start operation in which the delay time TI exceeds the threshold TH is less than a predetermined reference number of times. In the first modification, the reference number of times is set to 20 times. However, the reference number of times may be set to another number of times. In addition, the processing at an abnormal time may be always processing in which the first warning image is output to and displayed on display unit 17.
For example, in an example illustrated in Fig. 4, delay time TI exceeds threshold TH in the S1-th start operation, the S2 (= S1 + 86)-th start operation, and the S3 (= S2 + 19)-th start operation. In this case, at the point of time that the S2-th start operation is performed, the number of times NU1 of the start operations performed between the current start operation and the previous start operation in which the delay time TI exceeds the threshold TH, that is, the S1-th start operation is 20 times or more, that is, 85 times, and the time condition is not satisfied. Therefore, controller 18 does not make the display unit 17 output and display the first warning image.
On the other hand, at the point of time that the S3-th start operation is performed, the number of times NU2 of the start operations performed between the current start operation and the previous start operation in which the delay time TI exceeds threshold TH, that is, the S2-th start operation is less than 20 times, that is, 18 times, and the time condition is satisfied. Therefore, controller 18 makes display unit 17 output and display the first warning image.
Other configurations and operations are the same as the configurations and the operations in the above exemplary embodiment and hence, the detailed description thereof will be omitted.

(Second modification of exemplary embodiment - not according to the claimed invention)

Also in a second modification of the exemplary embodiment, the processing at an abnormal time is always processing in which the first warning image is output and displayed on display unit 17.
In addition, the time condition satisfies at least one among a first condition that the delay time TI in the current start operation exceeds the predetermined first time threshold, a second condition that the number of delay times TI that exceed the predetermined second time threshold is included in delay times TI at a plurality of recently-set points of time including the present time at which the start operation is performed, and the number of such delay times TI is more than or equal to a predetermined reference number, and a third condition that delay time TI at the current start operation exceeds the predetermined third time threshold and the number of the start operations performed between the current start operation and the previous start operation in which delay time TI exceeds a third time threshold becomes less than a predetermined reference number of times. The first to third time thresholds are set so as to satisfy the following expression 2.

$$\text{First time threshold} > \text{second time threshold} > \text{third time threshold} \dots \text{(expression 2)}$$

Other configurations and operations are the same as the configurations and the operations in the above exemplary embodiment and hence, the detailed description thereof will be omitted.

(Third modification of exemplary embodiment - not according to the claimed invention)

Also in a third modification of the exemplary embodiment, the processing at an abnormal time always is processing where controller 18 makes display unit 17 output and display the first warning image.
Further, the time condition is that the variance of delay times TI that are acquired at a plurality of recently-set number of points of time at which the start operation is performed becomes more than or equal to a predetermined value. The set number of times is, for example, 100 times. When the wear and the smear on tungsten electrode 21 are small, delay time TI is relatively constant. Accordingly, the variance becomes small. However, along with the increase of wear and smear on tungsten electrode 21, the variance is increased. Accordingly, the wear and the smear on tungsten electrode 21 can be estimated based on the variance.

Other configurations and operations are the same as the configurations and the operations in the above exemplary embodiment and hence, the detailed description thereof will be omitted.

The processing at an abnormal time may be processing where any one of the first to fourth warning images is selected, and is output and displayed corresponding to a value of the variance.

(Fourth modification of exemplary embodiment)

In a fourth modification of the exemplary embodiment, controller 18 performs processing where a hot start set current value is changed to a larger current value as a processing at an abnormal time (according to the claimed invention) in place of the processing where any one of the first to fourth warning images is output to and is displayed on display unit 17 (not according to the claimed invention). As a result, tungsten electrode 21 can be warmed faster. The hot start set current value is increased to such an extent that tungsten electrode 21 is not excessively consumed.

Other configurations and operations are the same as the configurations and the operations in the above exemplary embodiment and hence, the detailed description thereof will be omitted.

(Other modifications - not according to the claimed invention)

The time condition is not limited to the conditions described in the above-described exemplary embodiment and the first to fourth modifications of the exemplary embodiment. Other appropriate conditions may be set by experiments. In the above-described exemplary embodiment and the first to fourth modifications, the time condition is set in such a manner that when delay times at a plurality of previous points of time at which the start operation is performed before the current time are input to a predetermined function, an output value of the function satisfies a predetermined numerical value condition. However, the time condition may be set in such a manner that when delay times at a plurality of previous points of time of start operation before the current time are input to artificial intelligence (AI), an output of the AI satisfies a predetermined condition.

Further, in the fourth modification of the above-described exemplary embodiment, the processing at an abnormal time is set to the processing where a hot start set current value is increased. However, the processing at an abnormal time may be set to processing where an after-flow time during which a shielding gas is continuously released after finishing of welding is prolonged (not according to the claimed invention). Further, the processing at an abnormal time may be set to processing where other parameters such as a frequency of an output during an operation in an AC output mode are changed.

Further, as the processing at an abnormal time, controller 18 may perform both the processing where a hot start set current value is increased and the processing where controller 18 makes display unit 17 output and display the warning image.

Further, the processing at an abnormal time is not limited to the processing where controller 18 makes display unit 17 output an image, and may make a voice output device output a voice.

In the above-described exemplary embodiment, controller 18 changes the time condition in accordance with six setting conditions consisting of: an instruction value of a welding current, a flow rate of a shielding gas, a tip end angle of tungsten electrode 21, the dopant concentration in tungsten electrode 21, a diameter of tungsten electrode 21, and whether the mode is an alternating current (AC) output mode or a direct current (DC) output mode. However, the time condition may be changed in accordance with only a part of at least one of the six setting conditions. The time condition may not be changed.

INDUSTRIAL APPLICABILITY

The welding device of the present disclosure can suppress the performing of processing at an abnormal time due to a temporary factor other than wear of the tungsten electrode and the formation of smear on the tungsten electrode. The welding device of the present disclosure is useful as a welding device that performs welding by generating an arc between the tungsten electrode and the welding target.

REFERENCE MARKS IN THE DRAWINGS

| 10 | welding device |
| 13 | high frequency voltage application unit |

| 14 | welding output circuit unit |
| 15 | current detection unit |
| 17 | display unit (output unit) |
| 18 | controller |
| 21 | tungsten electrode |
| 30 | base material (welding target) |
| A | arc |
| TI | delay time |
| Th | hot start period |
| N1 | first number |
| N2 | second number |
| N3 | third number |
| N4 | fourth number |
| NU1, NU2 | number of times |

**Claims**

1. A welding device (10) that is configured to perform welding by generating an arc (A) between a tungsten electrode (21) and a welding target (30), the welding device (10) comprising:

   a high frequency voltage application unit (13) configured to apply a high frequency voltage between the tungsten electrode (21) and the welding target (30);
   a welding output circuit unit (14) configured to control a welding current;
   a current detection unit (15) configured to detect the welding current that is more than or equal to a predetermined current threshold; and
   a controller (18) configured, at a time of performing a start operation for making the high frequency voltage application unit (13) start applying of the high frequency voltage, to acquire a delay time (T1) from a point of time that the start operation is performed to a point of time that the welding current is detected by the current detection unit (15),
   **characterized in that** the controller (18) is further configured to determine whether or not delay times corresponding to the delay time that are acquired at a plurality of previous points of time at which the start operation is performed satisfy a predetermined time condition, and to perform predetermined abnormality processing in a case where the delay times satisfy the predetermined time condition, and
   **in that** the time condition is that the delay time at the start operation of the present time exceeds a predetermined threshold, and the number of times of the start operations performed between the start operation of the present time and the start operation of a previous time where the delay time exceeds the predetermined threshold is less than a predetermined reference number of times.

2. The welding device (10) according to Claim 1, wherein
   the time condition is changed in accordance with at least one setting condition selected from a group consisting of an instruction value of a welding current, a flow rate of a shielding gas, a tip end angle of a tungsten electrode (21), a dopant concentration in the tungsten electrode (21), a diameter of the tungsten electrode (21), and whether a mode is an alternating current output mode or a direct current output mode.

3. The welding device (10) according to any one of Claims 1 and 2, wherein

   the controller (18) is configured to control the welding output circuit unit (14) so as to set the welding current to a predetermined hot start set current value from a point of time that the welding current is detected by the current detection unit (15) to a point of time that a predetermined hot start period has elapsed, and
   the predetermined abnormality processing is a processing where the hot start set current value is changed to a larger value.

4. The welding device (10) according to any one of Claims 1 to 3, further comprising:

   an output unit configured to perform predetermined outputting, wherein
   the output unit is configured to be made to perform the predetermined outputting in the processing at an abnormal time.

## Patentansprüche

1. Schweißvorrichtung (10), die dazu ausgestaltet ist, Schweißen durch Erzeugen eines Lichtbogens (A) zwischen einer Wolframeletrode (21) und einem Schweißziel (30) durchzuführen, wobei die Schweißvorrichtung (10) umfasst:

   eine Hochfrequenzspannungsanlegungseinheit (13), die dazu ausgestaltet ist, eine Hochfrequenzspannung zwischen der Wolframelektrode (21) und dem Schweißziel (30) anzulegen;
   eine Schweißabgabe-Schaltungseinheit (14), die dazu ausgestaltet ist, einen Schweißstrom zu steuern;
   eine Stromdetektionseinheit (15), die dazu ausgestaltet ist, den Schweißstrom zu detektieren, der höher oder gleich einem vorbestimmten Stromschwellenwert ist; und
   eine Steuereinrichtung (18), die dazu ausgestaltet ist, zu einem Zeitpunkt des Durchführens eines Startvorgangs zum Veranlassen, dass die Hochfrequenzspannungsanlegungseinheit (13) das Anlegen der Hochfrequenzspannung startet, eine Verzögerungszeit (T1) von einem Zeitpunkt, zu dem der Startvorgang durchgeführt wird, bis zu einem Zeitpunkt zu erfassen, zu dem der Schweißstrom von der Stromdetektionseinheit (15) detektiert wird,
   **dadurch gekennzeichnet, dass** die Steuereinrichtung (18) ferner dazu ausgestaltet ist, zu bestimmen, ob Verzögerungszeiten, die der Verzögerungszeit entsprechen und die zu einer Vielzahl von vorherigen Zeitpunkten erfasst werden, zu denen der Startvorgang durchgeführt wird, eine vorbestimmte Zeitbedingung erfüllen oder nicht, und in einem Fall, in dem die Verzögerungszeiten die vorbestimmte Zeitbedingung erfüllen, die vorbestimmte Anomalieverarbeitung durchzuführen, und
   dadurch, dass die Zeitbedingung ist, dass die Verzögerungszeit am Startvorgang des gegenwärtigen Males einen vorbestimmten Schwellenwert überschreitet und die Anzahl von Malen, die die Startvorgänge zwischen dem Startvorgang des gegenwärtigen Males und dem Startvorgang eines vorherigen Males, wo die Verzögerungszeit den vorbestimmten Schwellenwert überschreitet, durchgeführt wurden, kleiner ist als eine vorbestimmte Bezugsanzahl von Malen.

2. Schweißvorrichtung (10) nach Anspruch 1, wobei
   die Zeitbedingung in Übereinstimmung mit mindestens einer Einstellbedingung geändert wird, die aus einer Gruppe ausgewählt wird, die besteht aus einem Anweisungswert eines Schweißstroms, einer Strömungsgeschwindigkeit eines Schutzgases, einem Spitzenendwinkel einer Wolframelektrode (21), einer Dotierstoffkonzentration in der Wolframelektrode (21), einem Durchmesser der Wolframelektrode (21) und ob ein Modus ein Wechselstrom-Abgabemodus oder ein Gleichstrom-Abgabemodus ist.

3. Schweißvorrichtung (10) nach einem der Ansprüche 1 und 2, wobei

   die Steuereinrichtung (18) dazu ausgestaltet ist, die Schweißabgabe-Schaltungseinheit (14) derart zu steuern, dass der Schweißstrom von einem Zeitpunkt, zu dem der Schweißstrom von der Stromdetektionseinheit (15) detektiert wird, bis zu einem Zeitpunkt, zu dem eine vorbestimmte Heißstartperiode verstrichen ist, auf einen vorbestimmten Heißstart-Sollstromwert eingestellt wird, und
   die vorbestimmte Anomalieverarbeitung eine Verarbeitung ist, in welcher der Heißstart-Sollstromwert auf einen höheren Wert geändert wird.

4. Schweißvorrichtung (10) nach einem der Ansprüche 1 bis 3, ferner umfassend:

   eine Abgabeeinheit, die dazu ausgestaltet ist, vorbestimmtes Abgeben durchzuführen, wobei
   die Abgabeeinheit dazu ausgestaltet ist, veranlasst zu werden, das vorbestimmte Abgeben in der Verarbeitung zu einem abnormalen Zeitpunkt durchzuführen.

## Revendications

1. Dispositif de soudage (10) qui est configuré pour effectuer un soudage en générant un arc (A) entre une électrode en tungstène (21) et une cible de soudage (30), le dispositif de soudage (10) comprenant :

   une unité d'application de tension haute fréquence (13) configurée pour appliquer une tension haute fréquence entre l'électrode en tungstène (21) et la cible de soudage (30) ;
   une unité de circuit de sortie de soudage (14) configurée pour commander le courant de soudage ;
   une unité de détection de courant (15) configurée pour détecter le courant de soudage qui est supérieur ou égal à un courant de seuil prédéterminé ; et

un contrôleur (18) configuré, au moment de la réalisation d'une opération de démarrage pour effectuer le démarrage de l'unité d'application de tension haute fréquence (13) appliquant la tension haute fréquence, pour acquérir le temps de délai (T1) entre le moment où l'opération de démarrage est effectuée et le moment où le courant de soudage est détecté par l'unité de détection de courant (15),

**caractérisé en ce que** le contrôleur (18) est en outre configuré pour déterminer si des temps de délai correspondant au temps de délai, qui sont acquis à une pluralité de moments antérieurs auxquels l'opération de démarrage est effectuée, satisfont ou non à une condition de temps prédéterminée, et pour effectuer un traitement d'anomalie prédéterminé dans le cas où les temps de délai satisfont à la condition de temps prédéterminée, et

**en ce que** la condition de temps est que le temps de délai à l'opération de démarrage du présent temps dépasse un seuil prédéterminé, et le nombre de fois que les opérations de démarrage sont effectuées entre l'opération de démarrage du présent temps et l'opération de démarrage d'un temps antérieur où le temps de délai dépasse le seuil prédéterminé est inférieur au nombre de fois de référence prédéterminé.

2. Dispositif de soudage (10) selon la revendication 1, dans lequel

la condition de temps est changée en fonction d'au moins une condition de réglage choisie dans le groupe constitué par une valeur d'instruction d'un courant de soudage, un débit d'un gaz protecteur, un angle d'extrémité de pointe d'une électrode en tungstène (21), une concentration de dopant dans l'électrode en tungstène (21), le diamètre de l'électrode en tungstène (21), et le fait que le mode est un mode de sortie en courant alternatif ou un mode de sortie en courant continu.

3. Dispositif de soudage (10) selon l'une quelconque des revendications 1 et 2, dans lequel

le contrôleur (18) est configuré pour commander l'unité de circuit de sortie de soudage (14) de façon à établir le courant de soudage à une valeur de courant d'établissement de démarrage à chaud prédéterminée entre le moment où le courant de soudage est détecté par l'unité de détection de courant (15) et le moment où une période de démarrage à chaud prédéterminée s'est écoulée, et

le traitement d'anomalie prédéterminé est un traitement où la valeur de courant d'établissement de démarrage à chaud est changée à une valeur plus élevée.

4. Dispositif de soudage (10) selon l'une quelconque des revendications 1 à 3, comprenant en outre :

une unité de sortie configurée pour effectuer une délivrance en sortie prédéterminée,

dans lequel l'unité de sortie est configurée pour être faite de façon à effectuer la délivrance en sortie prédéterminée dans le traitement à un moment anormal.

# FIG. 1

EP 4 094 874 B1

# FIG. 2

EP 4 094 874 B1

# FIG. 3

# FIG. 4

DELAY TIME

TH

NU1 (= 85 TIMES)

NU2 (= 18 TIMES)

S1   S2   S3   NUMBER OF TIMES
OF STARTING

**EP 4 094 874 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2017169409 A